# EUROPÄISCHE PATENTSCHRIFT

(11) **EP 3 933 739 B1**
(45) Veröffentlichungstag und Bekanntmachung des Hinweises auf die Patenterteilung: **21.05.2025**
(21) Anmeldenummer: 21183030.2
(22) Anmeldetag: 01.07.2021
(51) Int. Cl.: G06Q 30/00, H04H 60/71, H04N 21/488, H04N 21/81

(54) **CODEC ZUR ÜBERTRAGUNG VON SPORTVERANSTALTUNGEN**
CODEC FOR TRANSMISSION OF SPORTING EVENTS
CODEC DESTINÉ À LA TRANSMISSION DES ÉVÉNEMENTS SPORTIFS

(30) Priorität: 01.07.2020 DE 102020117371
(43) Veröffentlichungstag der Anmeldung: 05.01.2022
(73) Patentinhaber: Sporttotal Technology GmbH, 50829 Köln (DE)
(72) Erfinder: SCHLEICHER, Marco, 83043 Bad Aibling (DE); DÜRR, Tobias, 53501 Grafschaft (DE); FREY, Alexander, 10405 Berlin (DE); BUSCHNER, Maximilian, 10119 Berlin (DE)
(74) Vertreter: Richly & Ritschel Patentanwälte PartG mbB

(56) Entgegenhaltungen:
- EP-A1- 1 102 271
- WO-A1-2018/213481
- WO-A1-2019/094024
- WO-A1-98/41020
- CN-A- 110 035 311
- US-A1- 2012 210 348
- US-A1- 2019 215 475
- ZHANG MENG ET AL: "Hair-GAN: Recovering 3D hair structure from a single image using generative adversarial networks", VISUAL INFORMATICS, vol. 3, no. 2, 1 June 2019 (2019-06-01), pages 102 - 112, XP093224302, ISSN: 2468-502X, Retrieved from the Internet <URL:https://pdf.sciencedirectassets.com/315710/1-s2.0-S2468502X19X00042/1-s2.0-S2468502X18300652/main.pdf?X-Amz-Security-Token=IQoJb3JpZ2luX2VjEGUaCXVzLWVhc3QtMSJIMEYCIQCyEll1BWn/2TdkMntphSLi2+H7Yln0fdrbw4sUWVPWFAIhAJ7ir1OzHHE6ajMDhHTaz+RYXcGgzm9B69AqibvjRXHTKrwFCO7//////////wEQBRoMMDU5MDAzNTQ2ODY1IgwRj> DOI: 10.1016/j.visinf.2019.06.001
- YUXIAO ZHOU ET AL: "GroomCap: High-Fidelity Prior-Free Hair Capture", ARXIV.ORG, CORNELL UNIVERSITY LIBRARY, 201 OLIN LIBRARY CORNELL UNIVERSITY ITHACA, NY 14853, 1 September 2024 (2024-09-01), XP091873990, DOI: 10.1145/3687768

## Beschreibung

### HINTERGRUND

Bei der Aufzeichnung und Übertragung von Sportveranstaltungen, fallen neben den audiovisuellen Inhalten zusätzliche Informationen an, welche für die adäquate Rezeption und Auswertung des übertragenen Ereignisses notwendig sind. Dies betrifft insbesondere die aktuelle Spielzeit, den aktuellen Spielstand, Spielernamen, Informationen über Strafen, Verletzungen usw. Da von den Rezipienten eine ständige, unverzögerte Einsehbarkeit der Hauptinformationen (Zeit, Spielstand) gefordert wird, sind diese (Meta)Daten in Form einer Informationstafel direkt im sichtbaren Videosignal eingebettet ("Scoreboard") .

Dieses Vorgehen weist jedoch Schwachstellen auf, die insbesondere für Anbieter mit einem hohem Veranstaltungs- und Übertragungsvolumen erhebliche Nachteile darstellen können:
Der aktuelle Spielstand ist in das Bildsignal eingebrannt. Daher ist eine simultane Übertragung der gleichen Veranstaltung in verschiedenen Sprachen oder z.B. mit verschiedenen Sponsorenlogos nicht möglich, wenn nicht für jede Version des Signals ein redundanter Übertragungsweg geschaffen wird, was mit erheblichen Mehrkosten verbunden ist.

Ferner kann die Synchronizität von Spielinformationen und Videomaterial kann nur mit nicht unerheblichem technischem Aufwand sichergestellt werden. Metadaten und AV-Dokumente müssen parallel gespeichert und synchronisationspunkte verwaltet werden.

Werbliche Bildbestandteile können unter Umständen eine perpetuelle Nutzbarkeit der Inhalte gefährden, da diese Bestandteile Ansprüchen dritter unterlegen sein können.

Die Übertragung aller verfügbaren Informationen zum Spielgeschehen in Echtzeit, erfordert komplexe und wartungsintensive EDV-Anlagen.

Schließlich erzeugt die automatisierte Auswertung von Sportereignissen große Datenmengen, deren Handhabe stets aufwändiger wird.

WO2019094024A1 betrifft die Übertragung mittels Videostreaming und schlägt für dieses spezielle Verfahren als technische Lösung für die Übertragung von nicht-audiovisuellen Daten ein Overlay für das Video vor.

### ZUSAMMENFASSUNG

Es ist die Aufgabe der vorliegenden Erfindung, die oben beschriebene Probleme zu lösen. Die Aufgabe wird durch den Gegenstand der beigefügten Ansprüche gelöst.

Offenbart wird ein Verfahren zum Übertragen eines Stroms von nicht-audiovisuellen Daten einer Sportveranstaltung und eines Stroms von audiovisuellen Daten einer Sportveranstaltung in einem Datencontainer für Multimediadaten über ein Kommunikationsnetzwerk gemäss Anspruch 1.

Dadurch kann die Anzeige der nicht-audiovisuellen Daten auf einem Empfangsgerät variabel gestaltet werden.

Ein Teil der nicht-audiovisuellen Daten kann alle 1-100, 1-50 oder 1-10 Datenblöcke in einem Datenblock der Datenspur abgespeichert ist.

Dadurch wird gewährleistet, dass auch Teilbereiche der Datenspur alle relevanten Informationen enthalten.

Die nicht-audiovisuellen Daten können der Spielstand der Sportveranstaltung, die Spielzeit der Spielveranstaltung, einer Unterbrechung der Spielveranstaltung, Entscheidungen eines Schiedsrichters der Spielveranstaltung oder/und Daten zur Identität oder zu Eigenschaften der Teilnehmer der Spielveranstaltung sind.

Das Einbetten des Stroms von nicht-audiovisuellen Daten der Sportveranstaltung kann in eine Audiodatenspur des Datencontainers erfolgen.

Dadurch entfällt die Notwendigkeit, die nicht-audiovisuellen Inhalte auf einem Weg außerhalb des Datencontainers zu übermitteln oder die Struktur des Datencontainers zu verändern.

Die nicht-audiovisuellen Daten der Sportveranstaltung werden laut der Erfindung in die gleiche Audiodatenspur eingebettet wie die Audiodaten des Stroms der audiovisuellen Daten.

Die Vorgaben im Endgerät können von dem Aufenthaltsort des Endgeräts, einer in dem Endgerät voreingestellten Sprache, oder von durch den Nutzer vorgenommenen Einstellungen, oder von Einstellungen abhängen, die für den Nutzer ermittelt wurden.

Das Verfahren kann ferner umfassen
aa. Erhalten eines Stroms von audiovisuellen Daten zu der Sportveranstaltung;
ab. Bestimmen aus den audiovisuellen Daten zu der Sportveranstaltung mittels eines Deep-Learning Systems der nicht-audiovisuellen Daten der Sportveranstaltung.

Ein Prozessor kann konfiguriert sein das Verfahren auszuführen, wobei ein Kamerasystem den Prozessor umfassen kann.

Offenbart wird auch ein Datencontainer, der durch das Verfahren erhältlich ist.

Offenbart wird auch ein Verfahren umfassend die folgenden Schritte:
**a.** Übertragen des Datencontainers gemäß Anspruch 8 über das Kommunikationsnetzwerk;
b. Empfangen des Datencontainers durch das Endgerät, das an das Kommunikationsnetzwerk angeschlossen ist,
c. Extraktion der nicht-audiovisuellen Daten der Sportveranstaltung aus dem Datencontainer;
**d.** Wenn die Vorgaben an dem Endgerät bestimmen, dass die nicht-audiovisuellen Daten an dem Endgerät angezeigt werden sollen, Anzeigen der nicht-audiovisuellen Daten in visueller oder akustischer Form auf dem Endgerät.

Offenbart wird auch ein Prozessor, der konfiguriert ist das Verfahren zur Extraktion des Datencontainers durchzuführen, wobei dieser Prozessor in einem Endgerät umfassend ein Display enthalten sein kann.

### FIGUREN

Figur 1 illustriert die Übertragung von Informationen zu Sportveranstaltungen gemäß dem Stand der Technik
Figur 2 illustriert die Übertragung von Informationen zu Sportveranstaltung gemäß der vorliegenden Offenbarung

### DETAILLIERTE BESCHREIBUNG

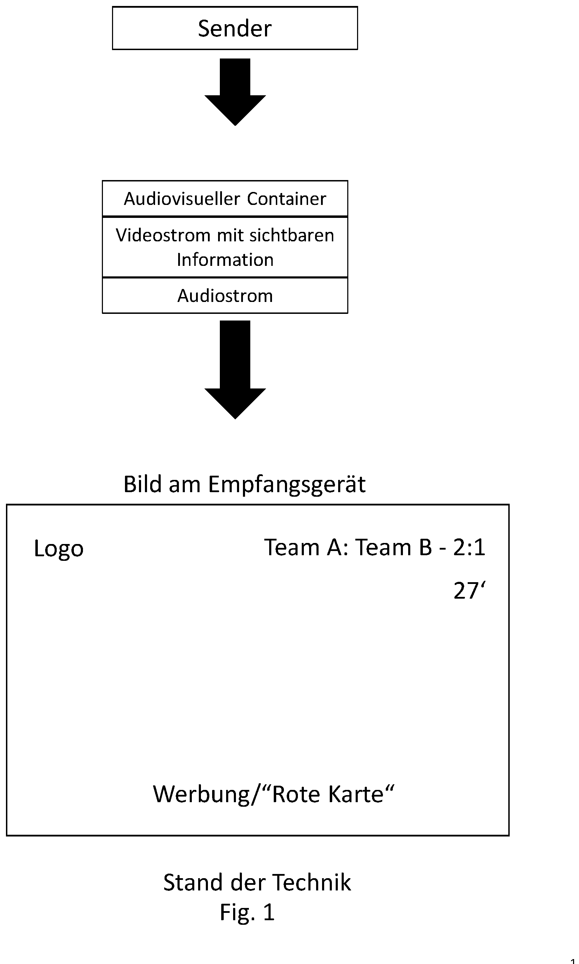

Figur 1 beschreibt das übliche Verfahren, mit dem Informationen zu Sportveranstaltungen (z.B. Spielstand, **Spielzeit,** Logo des übertragenden Senders, Werbung, Spielereignisse) übertragen werden.

Das Videosignal wird vor Start der Übertragung mit diesen Informationen überlagert, so dass bei Betrachtung der Sportveranstaltung an einem Endgerät durch den Nutzer diese Informationen immer sichtbar sind. Durch dieses Verfahren wird das sichtbare Bild des Videosignals dauerhaft verändert, **d.h.** die Information ist in das Bild eingebrannt.

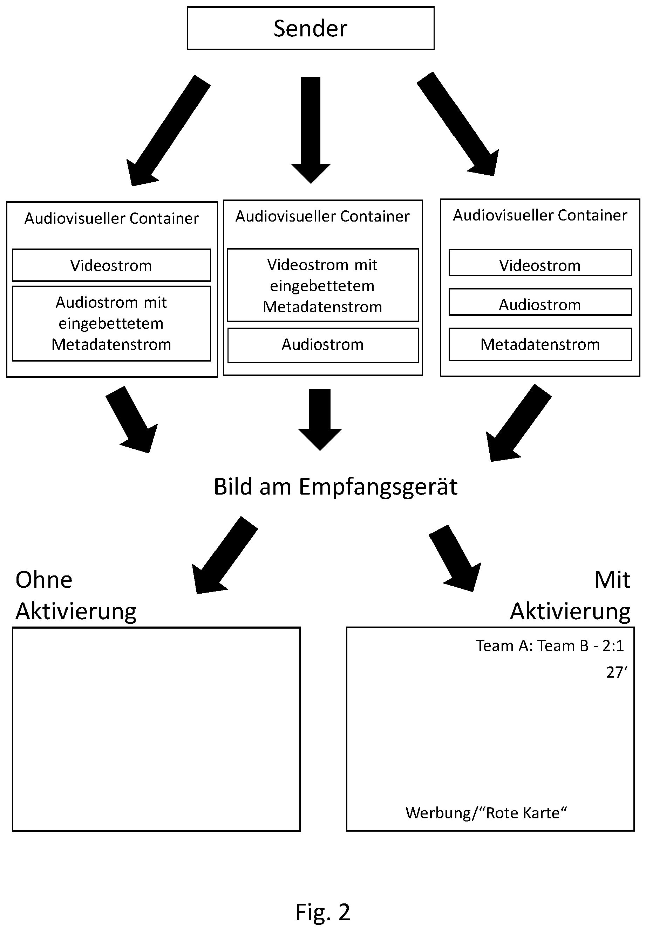

Das hier offenbarte Verfahren ist in Figur 2 illustriert.

Das hier offenbarte Verfahren zum Übertragen eines Stroms von nicht-audiovisuellen Daten einer Sportveranstaltung und eines Stroms von audiovisuellen Daten einer Sportveranstaltung in einem Datencontainer für Multimediadaten über ein Kommunikationsnetzwerk gemäss Anspruch 1.

Wie in Figur 2 zu sehen werden in abhängig von den Vorgaben in dem Endgerät die nicht-audiovisuellen Daten auf dem Bildschirm eines Endgeräts dargestellt, d.h. aktiviert, (Figur 2 unter rechts) oder nicht (Figur 2 unter links).

Zumindest ein Teil der nicht-audiovisuellen Daten kann in regelmäßiger Häufigkeit in einem Datenblock des Datencontainers vollständig abgespeichert sein. Unter einem Datenblock des Datencontainers wird ein diskreter Abschnitt eines Datenstroms verstanden. Dabei können die nicht-audiovisuellen Daten im Datenstrom alle 1-10, 1-50, 1-100 Datenblöcke abgespeichert sein.

Dadurch würden auch nach einer Unterbrechung bei der Übertragung des Datencontainers oder einem späteren Extrahieren eines Teils des Datenstroms ("Schneiden" des Datenstroms) die nicht-audiovisuellen Daten auch bei Ausgabe nur eines Teils des Datenstroms wieder zur Verfügung stehen.

Die nicht audiovisuellen Daten können Metadaten zu den Sportereignissen sein, z.B. Daten zum Spielstand der Sportveranstaltung, der Spielzeit der Spielveranstaltung, einer Unterbrechung der Spielveranstaltung, Entscheidungen eines Schiedsrichters der Spielveranstaltung oder/und Daten zur Identität oder zu Eigenschaften der Teilnehmer der Spielveranstaltung, Erzielen eines Punktes, z.B. Tores, Spielunterbrechung, Zeitpunkt und Art des Spielbeginns, Erteilen einer Verwarnung oder Spielstrafe, Daten zur Identität eines Akteurs (z.B. Spielers oder Schiedsrichters) sein. Vorzugsweise handelt es sich bei dem Teil der nicht-audiovisuellen Daten um den Spielstand und die Spielzeit.

Der Datencontainer kann mindestens zwei Datenspuren umfassen.

Der Daten-Container ist vorzugsweise ein Medien-Container. Der Medien-Container kann jeder Medien-Container sein, der mindestens eine Videodatenspur und mindestens eine Audiodatenspur enthalten kann. Insbesondere kann der Medien-Container ein Medien-Container sein, der mindestens eine Videodatenspur und mindestens zwei, drei, vier, fünf oder sechs Audiodatenspuren enthält.

Die Medien-Container können beispielsweise die Folgenden sein: FLV (mit HEVC/H.264, H.265, VP, Daala und AAC), MXF, GXF, MPEG2-PS, MPEG2-TS, 3GP, Windows Media Video (WMV)/ASF, AVI, MP4, Microsoft Digital Video Recording(DVR-MS), Matroska/WebM, WAVE, oder QuickTime.

Vorzugsweise ist der Medien-Container MP4 oder MPEG2-TS jeweils mit dem Videocodec H.264 und dem Audiocodec AAC.

Die im Medien-Container verwendeten Video-Codecs können sein: HEVC/H.264, H.265, VP, Daala und AAC, Avid DNxHD, DVCPro/DVCProHD, Digitales Video (DV), JPEG 2000, MPEG-1, MPEG-2, MPEG-4, VC-1/WMV9, Canopus HQ/HQX, Theora, YUV420, Apple ProRes 422/422 LT/422 HQ/Proxy/4444/oder 4444 XQ.

Die im Medien-Container verwendeten Audio-Codes können sein: AAC, MPEG Layer 2, MPEG-1 Audio Layer 3, Windows Media Audio WAV/PCM, FLAC, Opus, Vorbis, Adaptive Multi-Rate, AES Dolby E, Dolby Digital (AC3), Dolby Digital Plus (E-AC3).

Vorzugsweise ist der Strom an audiovisuellen Daten ein Live-Datenstrom, **d.h.** die audiovisuellen Daten werden unmittelbar vor Durchführung des Verfahrens erzeugt. Alternativ ist auch mögliche zuvor aufgezeichnete audiovisuellen Daten dem Verfahren zu unterwerfen.

Ferner wird ein Prozessor, der konfiguriert ist, die oben beschriebenen Verfahren durchzuführen, offenbart.

Das Kommunikationsnetzwerk ist vorzugsweise das Internet. Die Übertragung kann gemäß jedem Protokoll erfolgen, dass zum Streamen von audiovisuellen Daten geeignet ist. Insbesondere, kann die Übertragung gemäß folgenden Protokollen erfolgen: NDI, RIST, RTP, RTP+FEC, UDP, HLS, CMAF HLS, Low Latency HLS, DASH, RTMP (Real Time Messaging Protocol), SRT, Multipath TCP, TCP BBR, RTSP, HTTP, WebRTC oder Zixi.

Vorzugsweise erfolgt die Übertragung über RTMP oder Zixi.

Das Endgerät umfasst einen Prozessor und einen Bildschirm. Das Endgerät kann ein Fernseher, ein Computer mit Bildschirm, ein mobiles Endgerät, wie ein Mobiltelefon oder Tabletcomputer sein.

Die Extraktion der nicht-audiovisuellen Daten kann durch ein Computerprogramm erfolgen. Das Computerprogramm wandelt die nicht-audiovisuellen Daten in eine visuell oder erfindungsgemäss akustisch wahrnehmbare Darstellung der Daten gemäß den Vorgaben im Endgerät um. Das Computerprogramm hat Zugriff auf einen Speicher im Endgerät, in dem die Vorgaben abgespeichert sind. Das Computerprogramm kann eine App sein.

Die Vorgaben können die Positionierung (z.B. links-oben, rechtsoben, mittig-unten etc.) und Art der Darstellung am Bildschirm des Endgeräts sein (z.B. Größe, sichtbar, hörbar, Sprache, Form, Farbe) abhängig von der Art/Klasse der nicht-audiovisuellen Daten bestimmen. Die visuelle Darstellung kann statisch oder in bewegter Form erfolgen. Die Mittel zur visuellen Darstellung können dabei im Endgerät abgelegt sein oder durch das Endgerät über das Internet abgerufen werden. Diese Mittel können Formatierungsanweisungen, Charaktersätze, Bilder oder Videos sein.

Die akustische Darstellung kann in der Ausgabe von Wörtern, Sätzen, Musik, Lauten oder Geräuschen erfolgen, die im Endgerät gespeichert sind oder erzeugt werden. Die Vorgaben können vorsehen, dass die Darstellung der nicht-audiovisuellen Darstellung von der Mannschaft oder den Spielern abhängig sind, die mit den nicht-audiovisuellen Daten assoziiert sind.

Die Vorgaben können durch den Nutzer des Endgeräts a) nicht verändert werden, b) abhängig von der von der Art/Klasse der nicht-audiovisuellen Daten bezüglich die Positionierung und/oder Art der Darstellung verändert werden und sonst nicht verändert werden, oder c) durch den Nutzer vollständig verändert werden. Die Vorgaben im Endgerät können von dem Aufenthaltsort des Endgeräts, einer in dem Endgerät voreingestellten Sprache, oder von durch den Nutzer vorgenommenen Einstellungen, oder von Einstellungen abhängen, die für den Nutzer ermittelt wurden.

Das Verfahren kann das Einbetten des Stroms von nicht-audiovisuellen Daten der Sportveranstaltung in eine Audiodatenspur des Datencontainers umfassen (siehe Figur 2 Mitte links) .

Dies hat den Vorteil, dass keine zusätzlichen Datenströme für Metadaten benützt werden müssen. Ferner sind die eingefügten nicht-audiovisuellen Daten synchron mit den Videodaten.

Die nicht-audiovisuellen Daten können die einzigen Daten in der Audiodatenspur sein. Das bedeutet, dass die Audiodatenspur keine Audiodaten des Audiodatenstroms enthält. Es können aber Audiodaten in einer weiteren Audiodatenspur enthalten sein.

Die nicht-audiovisuellen Daten können dabei so kodiert sein, dass Sie durch einen Decoder als Nicht-Audiodaten erkannt werden und/oder sie durch denselben oder einen anderen Decoder als nicht-audiovisuellen Daten erkannt werden.

Alternativ oder zusätzlich können die nicht nicht-audiovisuellen Daten in die Audiodaten der Audiodatenspur eingebettet werden.

Dies hat den Vorteil, dass keine Audiodatenspur mit Nicht-Audiodaten belegt wird. Die nicht-audiovisuellen Daten können durch jegliches Verfahren, mit dem zusätzliche Daten in eine Audiodatenspur kodiert werden können, in die Audiodatenspur kodiert werden.

Gemäss Erfindung werden Nicht-Audiodaten durch Frequenz-Umtastung in die Audiodaten der Audiodatenspur kodiert. Dabei wird auf ein zeitkontinuierliches Trägersignal ein digitales Informationssignal aufgebracht (z.B. Continuous Phase Frequency Shift Keying, Minimum Shift Keying, oder Gaussian Minimum Shift Keying). Das kodierte zeitkontinuierliche Trägersignal (Analogsignal) kann dann mittels eines Audiocodecs in einen digitalen Audiodatenstrom kodiert werden (Digitalsignal) . Am Endgerät kann dieser Audiodatenstrom dekodiert werden, und das digitale Informationssignal wieder extrahiert bzw. bestimmt werden.

Am Endgerät können die Nicht-Audiodaten ausgelesen werden.

Das Einbetten des Stroms von nicht-audiovisuellen Daten der Sportveranstaltung kann, in einem Beispiel, das nicht Teil der Erfindung ist, in eine Videodatenspur des Datencontainers erfolgen (siehe Figur 2 Mitte Mitte).

Die nicht nicht-audiovisuellen Daten können dabei die einzigen Daten in der Videodatenspur sind, wobei noch eine weitere Videodatenspur vorhanden sein kann, in der sich das Videodatensignal befindet.

Alternativ oder zusätzlich können die nicht nicht-audiovisuellen Daten in die Videodaten der Videodatenspur eingebettet sein. Dies kann unter Verwendung von steganographischer Technologie oder der Technologie der nicht wahrnehmbaren Wasserzeichen erfolgen.

Ferner kann, in einem Beispiel, das nicht Teil der Erfindung ist, das Einbetten des Stroms von nicht-audiovisuellen Daten der Sportveranstaltung in eine Metadatenspur des Datencontainers erfolgen (siehe Figur 2 Mitte rechts).

Ferner wird ein Datencontainer offenbart, der durch das oben beschriebene erhältlich ist. Der Datencontainer kann auf einem Datenträger abgespeichert sein.

Die oben genannten Verfahren können auch einen Schritt zum Bestimmen der nicht-audiovisuellen Daten umfassen bevor Sie in den Datencontainer mit den audiovisuellen Daten eingebettet werden. Daher kann das Verfahren die folgende zusätzlichen Schritte umfassen
aa. Erhalten eines Stroms von audiovisuellen Daten zu der Sportveranstaltung in digitaler Form;
ab. Bestimmen aus den audiovisuellen Daten zu der Sportveranstaltung mittels eines Deep-Learning Systems die nicht-audiovisuellen Daten der Sportveranstaltung.

Somit werden die nicht-audiovisuellen Daten in automatisierter Weise erzeugt.

Ferner wird ein Datencontainer offenbart, der durch das oben beschriebenen Verfahren erhalten wurde.

Insbesondere wird folgendes Verfahren offenbart:
a. Übertragen des erhaltenen Datencontainers über das Kommunikationsnetzwerk;
**b.** Empfangen des Datencontainers durch das Endgerät, das an das Kommunikationsnetzwerk angeschlossen ist,
c. Extraktion der nicht-audiovisuellen Daten der Sportveranstaltung aus dem Datencontainer;
d. Wenn die Vorgaben an dem Endgerät bestimmen, dass die nicht-audiovisuellen Daten an dem Endgerät angezeigt werden sollen, Anzeigen der nicht-audiovisuellen Daten in visueller oder akustischer Form auf dem Endgerät.

Ferner wird ein Endgerät offenbart, dass die oben beschriebenen Verfahren durchführt.

## Patentansprüche

1. Verfahren zum Übertragen eines Stroms von nicht-audiovisuellen Daten einer Sportveranstaltung und eines Stroms von audiovisuellen Daten der Sportveranstaltung in einem Datencontainer für Multimediadaten über ein Kommunikationsnetzwerk umfassend:
a. Erhalten eines Stroms von audiovisuellen Daten zu der Sportveranstaltung;
b. Erhalten eines Stroms von nicht-audiovisuellen Daten der Sportveranstaltung;
c. Einbetten der visuellen Daten in eine Videodatenspur des Datencontainers und Einbetten der Audiodaten in eine Audiodatenspur des Datencontainers, Einbetten des Stroms von nicht-audiovisuellen Daten der Sportveranstaltung in die eine Audiodatenspur des Datencontainers, wobei die nicht-audiovisuellen Daten der Sportveranstaltung durch Frequenz-Umtastung in die Audiodaten der Audiodatenspur kodiert werden;
d. Ausgeben des Datencontainers;
wobei die nicht-audiovisuellen Daten derart im Datencontainer eingebettet sind, dass nur die Vorgaben an einem Endgerät bestimmen, ob die nicht-audiovisuellen Daten in einer visuellen oder akustischen Form an einem Endgerät angezeigt werden.

2. Verfahren gemäß Anspruch 1, wobei zumindest ein Teil der nicht-audiovisuellen Daten alle 1-100, 1-50 oder 1-10 Datenblöcke in einem Datenblock der Datenspur abgespeichert ist.

3. Verfahren gemäß Anspruch 1, wobei die nicht-audiovisuellen Daten der Spielstand der Sportveranstaltung, die Spielzeit der Spielveranstaltung, einer Unterbrechung der Spielveranstaltung, Entscheidungen eines Schiedsrichters der Spielveranstaltung oder/und Daten zur Identität oder zu Eigenschaften der Teilnehmer der Spielveranstaltung sind.

4. Verfahren gemäß einem der vorstehenden Ansprüche, wobei die Vorgaben im Endgerät von dem Aufenthaltsort des Endgeräts, einer in dem Endgerät voreingestellten Sprache, oder von durch den Nutzer vorgenommenen Einstellungen, oder von Einstellungen abhängen, die für den Nutzer ermittelt wurden.

5. Verfahren gemäß einem der vorstehenden Ansprüche, wobei Schritt 1.a) umfasst
aa. Erhalten eines Stroms von audiovisuellen Daten zu der Sportveranstaltung;
ab. Bestimmen aus den audiovisuellen Daten zu der Sportveranstaltung mittels eines Deep-Learning Systems der nicht-audiovisuellen Daten der Sportveranstaltung.

6. Prozessor konfiguriert das Verfahren gemäß der Ansprüche 1-5 auszuführen.

7. Kamerasystem umfassend den Prozessor gemäß Anspruch 6.

8. Datencontainer erhältlich durch das Verfahren gemäß der Ansprüche 1 - 5.

9. Verfahren umfassend:
a. Übertragen des Datencontainers gemäß Anspruch 8 über das Kommunikationsnetzwerk;
b. Empfangen des Datencontainers durch das Endgerät, das an das Kommunikationsnetzwerk angeschlossen ist,
c. Extraktion der nicht-audiovisuellen Daten der Sportveranstaltung aus dem Datencontainer;
d. Wenn die Vorgaben an dem Endgerät bestimmen, dass die nicht-audiovisuellen Daten an dem Endgerät angezeigt werden sollen, Anzeigen der nicht-audiovisuellen Daten in visueller oder akustischer Form auf dem Endgerät.

10. Prozessor konfiguriert das Verfahren gemäß des Anspruchs 9 auszuführen.

11. Endgerät umfassend ein Display und den Prozessor gemäß Anspruch 10.

## Claims

1. A method for transmitting a stream of non-audiovisual data of a sporting event and a stream of audiovisual data of the sporting event in a multimedia data container over a communications network, comprising:
a. obtaining a stream of audiovisual data of the sporting event;
b. obtaining a stream of non-audiovisual data of the sporting event;
c. embedding the visual data in a video data track of the data container and embedding the audio data in an audio data track of the data container, embedding the stream of non-audiovisual data of the sporting event in the one audio data track of the data container, wherein the non-audiovisual data of the sporting event is encoded by frequency shift keying in the audio data of the audio data track;
d. outputting the data container;
wherein the non-audiovisual data is embedded in the data container in such a manner that only the specifications at a terminal determine whether the non-audiovisual data is displayed in a visual or an audible form at a terminal.

2. The method according to claim 1, wherein at least some of the non-audiovisual data is stored in every 1-100, 1-50 or 1-10 data blocks in a data block of the data track.

3. The method according to claim 1, wherein the non-audiovisual data is the score of the sporting event, the playing time of the game event, an interruption of the game event, decisions of a referee of the game event or/and data on the identity or characteristics of the participants of the game event.

4. The method according to any of the preceding claims, wherein the defaults in the terminal depend on the location of the terminal, on a language preset in the terminal, on settings made by the user, or on settings determined for the user.

5. The method according to any preceding claim, wherein step 1.a) comprises
aa. obtaining a stream of audiovisual data of the sporting event;
ab. determining the non-audiovisual data of the sporting event from the audiovisual data of the sporting event using a deep learning system.

6. A processor configured to carry out the method according to claims 1 to 5.

7. A camera system comprising the processor according to claim 6.

8. A data container obtainable by the method according to claims 1 to 5.

9. The method comprising:
a. transmitting the data container according to claim 8 over the communication network;
b. receiving the data container by the terminal connected to the communication network,
c. extraction of the non-audiovisual data of the sporting event from the data container;
d. if the specifications for the terminal determine that the non-audiovisual data should be displayed on the terminal, displaying the non-audiovisual data in visual or acoustic form on the terminal.

10. The processor configured to execute the method according to claim 9.

11. A terminal comprising a display and the processor according to claim 10.

## Revendications

1. Procédé permettant la transmission d'un flux de données non audiovisuelles d'un évènement sportif et d'un flux de données audiovisuelles de l'évènement sportif dans un conteneur de données pour données multimédia par l'intermédiaire d'un réseau de communication comprenant :
a. l'obtention d'un flux de données audiovisuelles concernant l'évènement sportif ;
b. l'obtention d'un flux de données non audiovisuelles de l'évènement sportif ;
c. l'intégration des données visuelles dans une piste de données vidéo du conteneur de données et l'intégration des données audio dans une piste de données audio du conteneur de données, l'intégration du flux de données non audiovisuelles de l'évènement sportif dans l'une piste de données audio du conteneur de données, dans lequel les données non audiovisuelles de l'évènement sportif sont codées par modulation par déplacement de fréquence dans les données audio de la piste de données audio ;
d. l'émission du conteneur de données ;
dans lequel les données non audiovisuelles sont intégrées dans le conteneur de données de telle sorte que seules les spécifications sur un terminal déterminent si les données non audiovisuelles sont affichées sous une forme visuelle ou acoustique sur un terminal.

2. Procédé selon la revendication 1, dans lequel au moins une partie des données non audiovisuelles est stockée tous les 1-100, 1-50 ou 1-10 blocs de données dans un bloc de données de la piste de données.

3. Procédé selon la revendication 1, dans lequel les données non audiovisuelles sont le score de l'évènement sportif, le temps de jeu de l'évènement sportif, une interruption de l'évènement sportif, des décisions d'un arbitre de l'évènement sportif et/ou des données concernant l'identité ou des caractéristiques des participants à l'évènement sportif.

4. Procédé selon l'une des revendications précédentes, dans lequel les spécifications dans le terminal dépendent de l'emplacement du terminal, d'une langue préréglée dans le terminal, ou de réglages effectués par l'utilisateur, ou de réglages définis pour l'utilisateur.

5. Procédé selon l'une des revendications précédentes, dans lequel l'étape 1.a) comprend
aa. l'obtention d'un flux de données audiovisuelles concernant l'évènement sportif ;
ab. la détermination, à partir des données audiovisuelles concernant l'évènement sportif, des données non audiovisuelles de l'évènement sportif au moyen d'un système d'apprentissage profond.

6. Processeur configuré pour exécuter le procédé selon les revendications 1 à 5.

7. Système formant caméra comprenant le processeur selon la revendication 6.

8. Conteneur de données pouvant être obtenu par le procédé selon les revendications 1 à 5.

9. Procédé comprenant :
a. la transmission du conteneur de données selon la revendication 8 par l'intermédiaire du réseau de communication ;
b. la réception du conteneur de données par le terminal connecté au réseau de communication,
c. l'extraction des données non-audiovisuelles de l'évènement sportif du conteneur de données ;
d. si les spécifications sur le terminal déterminent que les données non audiovisuelles doivent être affichées sur le terminal, l'affichage des données non audiovisuelles sous une forme visuelle ou acoustique sur le terminal.

10. Processeur configuré pour exécuter le procédé selon la revendication 9.

11. Terminal comprenant un dispositif d'affichage et le processeur selon la revendication 10.
